# EUROPEAN PATENT SPECIFICATION

(11) **EP 2 444 461 B1**
(45) Date of publication and mention of the grant of the patent: **08.07.2020**
(21) Application number: 11250862.7
(22) Date of filing: 21.10.2011
(51) Int. Cl.: C09D 7/00, B05C 17/00, B05D 5/00, B05D 7/14

(54) **Touch-up paint**
Auffrischungsfarbe
Peinture de raccord

(30) Priority: 23.10.2010 GB 201018015
(43) Date of publication of application: 25.04.2012
(73) Proprietor: Graham, Jonathan, Banbury Oxfordshire OX16 4SP (GB); King, David, Upper Brailes Banbury Oxfordshire OX15 5AT (GB)
(72) Inventor: Graham, Jonathan, Banbury Oxfordshire OX16 4SP (GB); King, David, Upper Brailes Banbury Oxfordshire OX15 5AT (GB)
(74) Representative: Salmon, Victoria Beatrice

(56) References cited:
- WO-A2-2005/123787
- WO-A2-2010/147690
- US-A- 4 451 605
- US-A- 4 544 578
- US-A- 5 077 086
- US-A1- 2006 009 545
- US-A1- 2008 113 091

## Description

### Field

This invention relates to touch-up paint, that is to say paint for touching up chips or scratches in the original paint work on the body of a painted item and in particular for repairing automotive paint work.

### Background of the Invention

Paint repair kits have been in the public domain for many years and typically are sometimes provided with a new motor vehicle by the vehicle manufacturer and typically comprise a small sample of the original paint provided in a closed container. Water based paints have become popular in the manufacture of cars and the top coatings of paint are supplied as a coloured base layer over coated by a clear lacquer. In such cases the touch up paint may be provided as a two part system comprising the base coat in container and a sample of the clear lacquer in another container. These touch-up paints are not easy for application by the complete novice.

US2006009545 describes a prior art lacquer composition, US4544578 describes a prior art aerosol paint for repairing plastic automotive components, and US5077086 describes a prior art touch-up paint.
The present invention provides a touch up paint which is easy to apply.

### Statements of Invention

According to the present invention there is provided a touch-up paint as set out in the appended claims.

The composition is conveniently pigmented by mixing with a pigmented proprietary solvent based paint, preferably a polyester resin based paint which is already coloured as is desired. Polyesters based paints include acrylic and acrylate based paints.

The proprietary paint is mixed with the composition such that 100 parts of proprietary paint are mixed with between 50 parts to 100 parts of composition (parts are parts by weight) and preferably 60 parts of composition.

The preferred composition comprises acrylic resin in the form of beads dissolved in MPK (methyl propyl ketone) and a compatible diluent in the form of acetone and a fumed silica. Typical beads of acrylic resin having an average diameter of from about 10 to 100 microns and preferred acrylic resins are poly-(methyl methacrylate), poly-(ethyl methacrylate) and poly-(ethylene glycol dimethacrylate).

The preferred composition comprises:
100 parts acrylic resin
80 - 120 parts MPK
100-250 parts acetone
1-4 parts of fumed silica.

The most preferred composition comprises :
100 parts acrylic resin
100 parts MPK
200 parts acetone
2 parts hydrophobic fumed silica
which is mixed 60 parts by weight with 100 parts of paint.

According to a second aspect of the present invention the touch-up paint is supplied in a kit further including a solvent mix which is used in combination with a soft rag or other wipe for blending the touch-up paint with the surrounding surface.

The preferred solvent mix comprises about 40% xylene and 60% Naptha.

The Invention provide a quick drying touch-up paint and kit suitable for use with most paint types and in particular provides a simple one pot touch-up paint which can be used to repair paint chips on paintwork including a clear lacquered top coat.

### Detailed description of the Invention

The invention provides for a touch-up paint for the repair of chips or scratches in paintwork according to claim 1, particularly, but not exclusively, to the paintwork of transports including boats, planes, trains, cars, motor cycles and lorries or wagons.

The touch-up paint includes a polymeric resin dissolved in a suitable solvent and further including a compatible dilulent having a lower evaporation point than the solvent and fumed silica and which is pigmented to match the surface being repaired.

The preferred touch-up paint composition includes the ingredients shown in table 1 below.

**Table 1**

| | |
|---|---|
| 100 | parts acrylic resin |
| 80 - 120 | parts MPK |
| 100-250 | parts acetone |
| 1-4 | parts of fumed silica. |

The fumed silica is beneficial to the touch up paint in that it is thought to cause the paint to swell within the chip or scratch.

Conveniently, the touch-up paint composition Is pigmented by mixing the composition with an existing proprietary solvent based paint, preferably a polyester resin based paint, coloured to match the paint work to be repaired. This is particularly so for touch-up paints for the repair of chips and/or scratches in car body paint work.

A suitable touch-up paint can be formed by mixing a coloured proprietary solvent based polyester paint with the touch-up composition in the ratio of a 100 parts of paint to between 50 to 100 parts of composition, and preferably 60 parts of composition.

The amount of acetone included in the composition shown in Table. 1 effects the time required for the paint to become tack free. Without any acetone present, the time to dry would be in the order of 30 minutes and as the amount of acetone is increased the drying time decreases to a preferred range of between 30 seconds and 5 minutes.

As the weight of composition to proprietary paint increases the opacity of the touch-up paint decreases and when the amount of composition exceeds 100 parts the opacity of the touch-up paint becomes unacceptable. Suitable solvent based paints are available from PPG under the trade name Deltron.

In the preferred embodiment of the Invention the touch-up paint comprises the following ingredients as shown in table 2 below:

**Table 2**

| | |
|---|---|
| 100 | parts of a proprietary solvent based polyester resin based paint ( Deltron available from PPG). |
| 60 | parts of the composition made up as shown in table 3. |

**Table 3**

| | |
|---|---|
| 100 | parts acrylic resin |
| 100 | parts MPK |
| 200 | parts acetone |
| 2 | parts hydrophobic fumed silica |

A suitable hydrophobic fumed silica is available from Aerosil R 972 available from Evonik Degussa GmbH.

The touch-up composition is prepared by dissolving the acrylic beads in the MPK and then mixing in the acetone followed by the fumed silica. The mixed composition is then further mixed with the proprietary pigmented solvent based paint to form the touch-up paint.

In use the touch-up paint may be supplied as part of kit comprising a touch-up paint as described above in a suitable container and further including a soft rag or wipe and a blending solution also provided in a respective suitable container. The blending solution assists in blending the touched -up area with the surrounding paint work.

The touch-up paint is applied to the chip or scratch by a suitable means, for example a brush which may be supplied for example on the closure of a paint container. The paint should be proud of the surrounding surface and is allowed to dry ideally in about 30 second but this will depend on the ambient conditions. Once the touch-up paint is dry, the rag is impregnated with the blending solution and is the wiped across the dried touch-up paint to remove the excess and blend the touch-up paint with the surrounding surface.

The preferred blending solution comprises a solvent mix comprising xylene and naptha , preferably about 40% xylene and 60% Naptha.

## Claims

1. A touch-up paint for the repair of chips or scratches in automotive paintwork and which comprises a composition including a polymeric resin dissolved in a suitable solvent, **characterised in that** it further includes a compatible dilulent having a lower evaporation point than the solvent and fumed silica, wherein the touch-up paint further includes a pigmented proprietary solvent based paint such that 100 parts of said proprietary paint is mixed with between 50 parts to 100 parts by weight of said composition.

2. A touch-up paint as claimed in Claim 1, **characterised in that** said proprietary paint is a polyester resin based paint

3. A touch-up paint as claimed in any one of Claims 1 to 2, **characterised in that** the composition comprises acrylic resin dissolved in MPK (methylpropyl ketone) with a compatible diluent in the form of acetone and a fumed silica.

4. A touch-up paint as claimed in any one of Claims 1 to 3, **characterised in that** the fumed silica is a hydrophobic fumed silica coated in a silane.

5. A touch-up paint as claimed in any one of Claims 1 to 4, **characterised in that** the composition comprises:
100 parts acrylic resin
80-120 parts MPK (methyl propyl ketone)
100-250 parts acetone
1-4 parts of fumed silica.

6. A touch-up paint as claimed in any one of Claims 1 to 5, **characterised in that** the composition comprises:
100 parts acrylic resin
100 parts MPK (methyl propyl ketone)
200 parts acetone
2 parts hydrophobic fumed silica
and the composition is mixed 60 parts by weight with 100 parts of the proprietary solvent based paint.

7. A touch-up paint kit comprising a touch-up paint as claimed in any one of Claims 1 to 6, **characterised in that** the touch-up kit further comprises a blending solution provided in a respective suitable container, adapted to be used in combination with a soft rag or other wipe for wiping across dried touch-up paint and blending the touch-up paint with the surrounding surface.

8. A touch up paint kit as claimed in Claim 7, **characterised in that** the blending solution comprises a solvent mix comprising xylene and Naptha.

9. A touch up paint kit as claimed in Claim 8, **characterised in that** the solvent mix comprising about 40% xylene and about 60% Naptha.

10. A method of producing a touch-up paint adapted for the repair of chips or scratches in automotive paintwork, **characterised in that** it comprises the steps of providing a polymeric resin dissolved in a suitable solvent, adding a compatible diluent having a lower evaporation point than said solvent and adding a fumed silica, to produce a composition, then mixing said composition with a pigmented proprietary solvent based paint, such that 100 parts of said proprietary paint is mixed with between 50 parts to 100 parts by weight of said composition.

11. A method of producing a touch-up paint as claimed in claim 10, **characterised in that** said polymeric resin comprises acrylic resin, said suitable solvent comprises MPK (methylpropyl ketone) and said compatible diluent having a lower evaporation point comprises acetone.

12. A method of repairing chips or scratches in automotive paintwork comprising the steps of applying a touch-up paint as claimed in any of Claims 1 to 6 to the chip or scratch, allowing the touch-up paint to dry, impregnating a blending solution into a wipe and applying the wipe across the dry touch-up paint to remove excess paint and to blend the paint with a surrounding surface.

13. A method of repairing chips or scratches in automotive paintwork as claimed in Claim 12, **characterised in that** the blending solution comprises xylene and naptha.

14. A touch-up paint as claimed in any one of claims 1 to 6, or a method of producing a touch-up paint as claimed in claims 10 or 11, **characterised in that** the composition comprises:
100 parts acrylic resin
100 parts MPK (methyl propyl ketone)
200 parts acetone
2 parts hydrohobic fumed silica,
and the composition is mixed 60 parts by weight with 100 parts of the proprietary solvent based paint.

## Patentansprüche

1. Ausbesserungslack für die Reparatur von Abplatzungen oder Kratzern an Kraftfahrzeuglackierung, der eine Zusammensetzung umfasst, die ein Polymerharz enthält, welches in einem geeigneten Lösungsmittel gelöst ist, **dadurch gekennzeichnet, dass** er ferner ein kompatibles Verdünnungsmittel mit einem niedrigeren Verdampfungspunkt als das Lösungsmittel und pyrogene Kieselsäure enthält, wobei der Ausbesserungslack ferner einen pigmentierten markenlösungsmittelbasierten Lack enthält, sodass 100 Teile des Markenlacks mit zwischen 50 bis 100 Gewichtsteilen der Zusammensetzung gemischt sind.

2. Ausbesserungslack nach Anspruch 1, **dadurch gekennzeichnet, dass** der Markenlack ein polyesterharzbasierter Lack ist.

3. Ausbesserungslack nach einem der Ansprüche 1 bis 2, **dadurch gekennzeichnet, dass** die Zusammensetzung in MPK (Methylpropylketon) gelöstes Acrylharz mit einem kompatiblen Verdünnungsmittel in der Form von Aceton und einer pyrogenen Kieselsäure umfasst.

4. Ausbesserungslack nach einem der Ansprüche 1 bis 3, **dadurch gekennzeichnet, dass** die pyrogene Kieselsäure eine mit einem Silan beschichtete, wasserabweisende pyrogene Kieselsäure ist.

5. Ausbesserungslack nach einem der Ansprüche 1 bis 4, **dadurch gekennzeichnet, dass** die Zusammensetzung umfasst:
100 Teile Acrylharz,
80 bis 120 Teile MPK (Methylpropylketon),
100 bis 250 Teile Aceton,
1 bis 4 Teile pyrogene Kieselsäure.

6. Ausbesserungslack nach einem der Ansprüche 1 bis 5, **dadurch gekennzeichnet, dass** die Zusammensetzung umfasst:
100 Teile Acrylharz,
100 Teile MPK (Methylpropylketon),
200 Teile Aceton,
2 Teile wasserabweisende pyrogene Kieselsäure,
und wobei die Zusammensetzung zu 60 Gewichtsteilen mit 100 Teilen des markenlösungsmittelbasierten Lacks gemischt ist.

7. Ausbesserungslack-Kit, umfassend einen Ausbesserungslack nach einem der Ansprüche 1 bis 6, **dadurch gekennzeichnet, dass** das Ausbesserungslack-Kit ferner eine Angleichlösung umfasst, die in einem jeweiligen geeigneten Behälter vorgesehen ist und zum Gebrauch mit einem weichen Lappen oder anderen Wischtuch zum Wischen über getrockneten Ausbesserungslack und Angleichen des Ausbesserungslacks an die umgebende Oberfläche geeignet ist.

8. Ausbesserungslack-Kit nach Anspruch 7, **dadurch gekennzeichnet, dass** die Angleichlösung eine Lösungsmittelmischung umfasst, die Xylol und Naphtha umfasst.

9. Ausbesserungslack-Kit nach Anspruch 8, **dadurch gekennzeichnet, dass** die Lösungsmittelmischung ungefähr 40 % Xylol und ungefähr 60 % Naphtha umfasst.

10. Verfahren zum Herstellen eines Ausbesserungslacks, der für die Reparatur von Abplatzungen oder Kratzern an Kraftfahrzeuglackierung geeignet ist, **dadurch gekennzeichnet, dass** es die Schritte des Bereitstellens eines Polymerharzes, welches in einem geeigneten Lösungsmittel gelöst ist, des Zusetzens eines kompatiblen Verdünnungsmittels mit einem niedrigeren Verdampfungspunkt als das Lösungsmittel und des Zusetzens einer pyrogenen Kieselsäure zum Herstellen einer Zusammensetzung, dann des Mischens der Zusammensetzung mit einem pigmentierten markenlösungsmittelbasierten Lack umfasst, sodass 100 Teile des Markenlacks mit zwischen 50 bis 100 Gewichtsteilen der Zusammensetzung gemischt werden.

11. Verfahren zum Herstellen eines Ausbesserungslacks nach Anspruch 10, **dadurch gekennzeichnet, dass** das Polymerharz Acrylharz umfasst, das geeignete Lösungsmittel MPK (Methylpropylketon) umfasst und das kompatible Verdünnungsmittel mit einem niedrigeren Verdampfungspunkt Aceton umfasst.

12. Verfahren zum Reparieren von Abplatzungen oder Kratzern an Kraftfahrzeuglack, umfassend die Schritte des Auftragens eines Ausbesserungslacks nach einem der Ansprüche 1 bis 6 auf die Abplatzung oder den Kratzer, des Ermöglichens, dass der Ausbesserungslack trocknet, des Imprägnierens eines Wischtuchs mit einer Angleichlösung und des Anwendens des Wischtuchs über dem getrockneten Lack zum Entfernen von überschüssigem Lack und zum Angleichen des Lacks an die umgebende Oberfläche.

13. Verfahren zum Reparieren von Abplatzungen oder Kratzern an Kraftfahrzeuglack nach Anspruch 12, **dadurch gekennzeichnet, dass** die Angleichlösung eine Lösungsmittelmischung umfasst, die Xylol und Naphtha umfasst.

14. Ausbesserungslack nach einem der Ansprüche 1 bis 6 oder Verfahren zum Herstellen eines Ausbesserungslacks nach Anspruch 10 oder 11, **dadurch gekennzeichnet, dass** die Zusammensetzung umfasst:
100 Teile Acrylharz,
100 Teile MPK (Methylpropylketon),
200 Teile Aceton,
2 Teile wasserabweisende pyrogene Kieselsäure,
und wobei die Zusammensetzung zu 60 Gewichtsteilen mit 100 Teilen des markenlösungsmittelbasierten Lacks gemischt ist.

## Revendications

1. Peinture de raccord pour la réparation d'écailles ou de rayures en peinture automobile et qui comprend une composition incluant une résine polymère dissoute dans un solvant approprié, **caractérisée en ce qu'**elle inclut en outre un diluant compatible ayant un point d'évaporation plus faible que le solvant et de la silice fumée, dans laquelle la peinture de raccord inclut en outre une peinture à base de solvant brevetée pigmentée de sorte que 100 parties de ladite peinture brevetée sont mélangées à entre 50 parties et 100 parties en poids de ladite composition.

2. Peinture de raccord selon la revendication 1, **caractérisée en ce que** ladite peinture brevetée est une peinture à base de résine de polyester.

3. Peinture de raccord selon l'une quelconque des revendications 1 à 2, **caractérisée en ce que** la composition comprend de la résine acrylique dissoute dans de la MPK (méthyl propyl cétone) avec un diluant compatible sous la forme d'acétone et d'une silice fumée.

4. Peinture de raccord selon l'une quelconque des revendications 1 à 3, **caractérisée en ce que** la silice fumée est une silice fumée hydrophobe enduite d'un silane.

5. Peinture de raccord selon l'une quelconque des revendications 1 à 4, **caractérisée en ce que** la composition comprend :
100 parties de résine acrylique
80 à 120 parties de MPK (méthyl propyl cétone)
100 à 250 parties d'acétone
1 à 4 parties de silice fumée.

6. Peinture de raccord selon l'une quelconque des revendications 1 à 5, **caractérisée en ce que** la composition comprend :
100 parties de résine acrylique
100 parties de MPK (méthyl propyl cétone)
200 parties d'acétone
2 parties de silice fumée hydrophobe
et la composition est mélangée à 60 parties en poids avec 100 parties de la peinture à base de solvant brevetée.

7. Kit de peinture de raccord comprenant une peinture de raccord selon l'une quelconque des revendications 1 à 6, **caractérisé en ce que** le kit de peinture de raccord comprend en outre une solution de mélange fournie dans un récipient approprié respectif, adapté pour être utilisé en combinaison avec un chiffon doux ou un autre tissu pour essuyer de la peinture de raccord séchée et mélanger la peinture de raccord avec la surface environnante.

8. Kit de peinture de raccord selon la revendication 7, **caractérisé en ce que** la solution de mélange comprend un mélange de solvants comprenant du xylène et du naphta.

9. Kit de peinture de raccord selon la revendication 8, **caractérisé en ce que** le mélange de solvants comprend environ 40 % de xylène et environ 60 % de naphta.

10. Procédé de production d'une peinture de raccord adaptée pour la réparation d'écailles ou de rayures en peinture automobile, **caractérisé en ce qu'**il comprend les étapes de fourniture d'une résine polymère dissoute dans un solvant approprié, d'ajout d'un diluant compatible ayant un point d'évaporation plus faible que ledit solvant et d'ajout d'une silice fumée, pour produire une composition, puis de mélange de ladite composition avec une peinture à base de solvant brevetée pigmentée, de sorte que 100 parties de ladite peinture brevetée sont mélangées à entre 50 parties et 100 parties en poids de ladite composition.

11. Procédé de production d'une peinture de raccord selon la revendication 10, **caractérisé en ce que** ladite résine polymère comprend une résine acrylique, ledit solvant approprié comprend de la MPK (méthyl propyl cétone) et ledit diluant compatible ayant un point d'évaporation plus faible comprend de l'acétone.

12. Procédé de réparation d'écailles ou de rayures en peinture automobile comprenant les étapes
d'application d'une peinture de raccord selon l'une quelconque des revendications 1 à 6 à l'écaille ou à la rayure,
de séchage de la peinture de raccord, d'imprégnation d'une solution de mélange dans un tissu et
d'application du tissu sur la peinture de raccord sèche pour éliminer l'excès de peinture et pour mélanger la peinture à une surface environnante.

13. Procédé de réparation d'écailles ou de rayures en peinture automobile selon la revendication 12, **caractérisé en ce que** la solution de mélange comprend du xylène et du naphta.

14. Peinture de raccord selon l'une quelconque des revendications 1 à 6, ou procédé de production d'une peinture de raccord selon les revendications 10 ou 11, **caractérisé en ce que** la composition comprend :
100 parties de résine acrylique
100 parties de MPK (méthyl propyl cétone)
200 parties d'acétone
2 parties de silice fumée hydrophobe,
et la composition est mélangée à 60 parties en poids avec 100 parties de la peinture à base de solvant brevetée.
